# EUROPÄISCHE PATENTSCHRIFT

(11) **EP 2 087 455 B1**
(45) Veröffentlichungstag und Bekanntmachung des Hinweises auf die Patenterteilung: **17.03.2010**
(21) Anmeldenummer: 07821358.4
(22) Anmeldetag: 16.10.2007
(51) Int. Cl.: G06K 7/00, G06K 7/08

(54) **ANORDNUNG UND VERFAHREN ZUR DATENERFASSUNG**
ARRANGEMENT AND METHOD FOR DATA ACQUISITION
DISPOSITIF ET PROCÉDÉ D'ACQUISITION DE DONNÉES

(30) Priorität: 08.11.2006 DE 102006052708
(43) Veröffentlichungstag der Anmeldung: 12.08.2009
(73) Patentinhaber: SIEMENS AKTIENGESELLSCHAFT, 80333 München (DE)
(72) Erfinder: FUCHS, Nikolaus, 3021 Pressbaum (AT); HAGL, Peter, 1120 Wien (AT)
(86) Internationale Anmeldenummer: PCT/EP2007/060991
(87) Internationale Veröffentlichungsnummer: WO 2008/055761

(56) Entgegenhaltungen:
- EP-A- 1 610 258
- DE-U1-202004 007 819
- US-A1- 2003 179 077

## Beschreibung

Die Erfindung bezieht sich auf eine in dem Oberbegriff des Patentanspruchs 1 angegebene Anordnung und ein in dem Oberbegriff des Anspruchs 7 angegebenes Verfahren zur Datenerfassung.

Nahezu alle Stückgüter des Handels sind mit einem Strichcode zur eindeutigen und einfachen Kennzeichnung versehen. Im Zuge der fortschreitenden Automatisierung und der Vereinfachung der Stückguterkennung werden die Strichcodes durch elektronische Datenträger, beispielsweise Auto Identification Devices oder Radio Frequency Identification Devices, ersetzt. Damit elektronischen Datenträgern Daten abgeben können, die von einer Erfassungseinheit empfangen werden, müssen diese sich beispielsweise in einem elektromagnetischen Wechselfeld der Erfassungseinheit befinden. Eine diesbezügliche Erfassungsvorrichtung ist aus der Gebrauchsmusterschrift DE 20 2005 014 644 U1 vorbekannt. Diese beschreibt, dass in den Datenträgern bei einer genügend großen Feldstärke des elektromagnetischen Wechselfeldes eine so große Spannung induziert wird, dass alle Datenträger aktiviert werden und Daten abgeben.

Wenn sich viele Datenträger im elektromagnetischen Wechselfeld der Erfassungseinheit befinden, kommt es aber zu einer großen Zahl von gleichzeitigen Datenabgaben der Datenträger. Die Datenabgabesignale der Datenträger können sich dabei gegenseitig stören oder werden von der Erfassungseinheit nicht einwandfrei empfangen.

Die Erfassungsvorrichtung aus DE 20 2005 014 644 U1 weist daher den Nachteil auf, dass eine Datenerfassung bei hoher Packungsdichte der Datenträger nicht möglich ist.

Die US 2003/0179077 A1 offenbart ein System zur Datenerfassung durch Abfragen von Transpondern. Durch eine Fokussierung des Abfragefeldes auf einen beschränkten Bereich mittels einer steuerbaren Antenne wird die Zahl der gleichzeitig antwortenden Transponder reduziert, so dass Antikollisionsmechanismen einfacher realisiert werden können. Die unabhängigen Ansprüche sind gegen diesen Stand der Technik abgegrenzt.

Die EP 1 610 258 A1 offenbart eine RFID Kommunikationsvorrichtung mit Mitteln zur Bestimmung einer RFID Tag Position. Dazu wird die Richtung der eintreffenden Funkwelle des RFID Tag durch mehreren Antennen abgeschätzt.

Die DE 20 2004 007 819 U1 offenbart mehrere mobile Datenträger mit einer Antennenanordnung zum berührungslosen Austausch von Daten, gekennzeichnet durch Mittel zur Einstellung einer ausgewählten Charakteristik der Antennenanordnung.

Es ist Aufgabe der vorliegenden Erfindung eine Anordnung und ein Verfahren anzugeben, die den oben genannten Nachteil vermeiden und eine störungsfreie Datenerfassung ermöglichen.

Gemäß der Erfindung wird die gestellte Aufgabe bei der Anordnung und dem Verfahren der eingangs erwähnten Art durch die im Patentanspruch 1 oder 5 aufgeführten Merkmale gelöst.

Der Gegenstand der Erfindung bringt den Vorteil, dass Datenträger mit hoher Packungsdichte erfasst werden können.

Der Gegenstand der Erfindung bringt den weiteren Vorteil mit sich, dass die Datenträger räumlich und zeitlich selektiv aktiviert werden können.

Der Gegenstand der Erfindung bringt den weiteren Vorteil mit sich, dass sich die elektromagnetischen Wechselfelder der Erfassungseinheiten derart überlagern, dass ein Feldstärke schwellwert zur Aktivierung der Datenträger gezielt vorgebbar räumlich und zeitlich überschreitbar ist.

Der Gegenstand der Erfindung bringt den weiteren Vorteil mit sich, dass durch eine Änderung der Sendeleistung der Erfassungseinheiten der Feldstärkeschwellwert räumlich und zeitlich gezielt vorgebbar überschritten wird.

Weitere vorteilhafte Ausbildungen sind in den Unteransprüchen angegeben.

Weitere Besonderheiten der Erfindung werden aus den nachfolgenden Erläuterungen mehrerer Ausführungsbeispiele anhand von Zeichnungen ersichtlich.

Es zeigen:
- Fig. 1:: ein Blockschaltbild einer Anordnung zur Datenerfassung,
- Fig. 2a,b:: eine räumliche Anordnungen mehrerer Erfassungseinheiten und
- Fig. 3:: eine Regalanordnung.

Die Erfindung beschreibt eine Anordnung und das dazugehörige Verfahren zur Datenerfassung zwischen mindestens einer Erfassungseinheit E1, E2, ...En und mindestens einem im elektromagnetischen Wechselfeld EMF1, EMF2, ...EMFn der oder jeder Erfassungseinheit E1, E2, ...En angeordneten Mittel RFID1, RFID2, ...RFIDn, beispielsweise ein elektronischer Datenträger, wobei das Mittel RFID1, RFID2, ...RFIDn erst bei Überschreiten eines Feldstärkeschwellwerts Emax des elektromagnetischen Wechselfeldes EMF1, EMF2, ...EMFn Daten abgibt, und die Feldstärke des elektromagnetischen Wechselfeldes EMF1, EMF2, ...EMFn so ausgebildet ist, dass innerhalb einer Volumeneinheit VE für einen Zeitabschnitt t der Feldstärkeschwellwert Emax überschritten wird.

Die elektromagnetischen Wechselfelder EMF1, EMF2, ...EMFn von mindestens zwei Erfassungseinheiten E1, E2, ...En überlagern sich derart, dass innerhalb einer vorgebbaren Volumeneinheit VE für einen vorgebbaren Zeitabschnitt t der Feldstärkeschwellwert Emax überschritten wird.

Die Sendeleistung und/oder Phase mindestens einer Erfassungseinheit E1, E2, ...En wird derart verändert, dass innerhalb einer Volumeneinheit VE für einen Zeitabschnitt t der Feldstärkeschwellwert Emax überschritten wird.

Die elektromagnetischen Wechselfelder EMF1, EMF2, ...EMFn mindestens zweier Erfassungseinheiten E1, E2, ...En überlagern sich derart und die Sendeleistung und/oder Phasenbeziehung zu den anderen Erfassungseinheiten mindestens einer Erfassungseinheit E1, E2, ...En lässt sich derart verändern, dass innerhalb einer vorgebbaren Volumeneinheit VE für einen vorgebbaren Zeitabschnitt t der Feldstärkeschwellwert Emax überschritten wird.

Mindestens ein Mittel RFID1, RFID2, ...RFIDn kann derart ausgebildet werden, dass die Datenabgabe des jeweiligen aktivierten Mittels RFID1, RFID2, ...RFIDn nur erfolgt, wenn ein vorgebbarer Feldstärkeschwellwert Emax überschritten wird. In seiner einfachsten Ausprägung ergibt sich dieser Schwellwert daraus, dass das Mittel RFID1, RFID2, ...RFIDn genügend Energie zum Antworten erhält. Diese Ausprägung ist per Definition Eigenschaft eines Mittels RFID1, RFID2, ...RFIDn, unterliegt aber bautechnisch bedingten Mittel-spezifischen Schwankungen. In einer weiteren Ausprägung misst das Mittel RFID1, RFID2, ...RFIDn die maximale Feldstärke und vergleicht sie mit einem eingebauten, unveränderlichen Wert. Der Vorteil liegt darin, dass so eine wesentlich höhere Genauigkeit des Feldstärkeschwellwertes Emax erreicht werden kann. In einer weiteren Ausprägung kann der Feldstärkeschwellwert Emax auch von der Erfassungseinheit E1, E2, ...En mittels einer Signalisierungsnachricht an das Mittel RFID1, RFID2, ...RFIDn übertragen werden, welches sein Antwortverhalten danach steuert.

Mindestens ein Mittel RFID1, RFID2, ...RFIDn kann derart ausgebildet werden, dass nach einer Datenabgabe des jeweiligen aktivierten Mittels RFID1, RFID2, ...RFIDn für einen vorgebbaren Zeitabschnitt dt keine weitere Datenabgabe von diesem Mittel RFID1, RFID2, ...RFIDn erfolgt. Dieses Zeitverhalten des Mittels kann zum Beispiel durch Entladung eines Kondensators über einen Widerstand erreicht werden. Der Kondensator wird dabei nach dem Senden einer Antwort geladen. Die Spannung, welche am Kondensator anliegt, unterbindet das Senden einer Antwort. Erst nachdem der Kondensator entladen ist, ist eine neuerliche Antwort möglich. Die Werte von Kapazität und Widerstand definieren den Zeitabschnitt dt, zum Beipsiel mit einer Genauigkeit von +-10%, und sind unveränderliche Eigenschaften des Mittels RFID1, RFID2, ...RFIDn. In einer weiteren Ausprägung kann die Länge des Zeitabschnittes dt auch von der Erfassungseinheit E1, E2, ...En mittels einer Signalisierungsnachricht an das Mittel RFID1, RFID2, ...RFIDn übertragen werden, welches sein Antwortverhalten dann danach steuert und beispielsweise den Kondensator mit einem entsprechenden Widerstand beschaltet oder bestimmte Werte von Widerstand und Kapazität des Kondensators auswählt. In einer weiteren Ausprägung kann das Mittel RFID1, RFID2, ...RFIDn den Zeitabschnitt auch mithilfe anderer bekannter Zeitmessungsverfahren, zum Beispiel mit einem Schwingkreis, bestimmen.

Mindestens ein Mittel RFID1, RFID2, ...RFIDn kann derart ausgebildet werden, dass nur dann eine Datenabgabe von diesem Mittel RFID1, RFID2, ...RFIDn erfolgt, wenn ein entsprechender Identifizierungscode von der Erfassungseinheit mittels einer Signalisierungsnachricht an das Mittel RFID1, RFID2, ...RFIDn übertragen wird. Das Mittel RFID1, RFID2, ...RFIDn vergleicht diesen Identifizierungscode beispielsweise mit einem unveränderlich einprogrammierten Wert, der Eigenschaft dieses Mittels RFID1, RFID2, ...RFIDn ist. Der Vorteil dieses Verfahrens ist, dass gezielt nur eine Untermenge aller Mittel RFID1, RFID2, ...RFIDn, die angesprochen wurden, zum Antworten veranlasst werden kann, und dadurch gegenseitige Störungen der Antworten vermieden werden können. In einer Ausprägung kann der verwendete Identifizierungscode eine Voll- oder Teilqualifizierung des eigenen Identifizierungscodes, zum Beispiel des EPC-Codes, des Mittels RFID1, RFID2, ...RFIDn sein, der beispielsweise alle Mittel RFID1, RFID2, ...RFIDn mit gemeinsamen Eigenschaften wie Produktkategorie, Lieferfirma, Erzeugungsdatum etc. enthält. Der Vorteil dieses Verfahrens besteht darin, gezielt nur eine spezifische Gruppe von Mitteln anzusprechen. In einer speziellen Unterausprägung werden bestimmte Zeichen als Platzhalter oder "Wildcard" verwendet. Diese ersetzen Zeichen, die nicht der Teilqualifizierung unterliegen, also beliebig sind. Es besteht der Vorteil, die Teilqualifizierung frei wählen zu können. Beispielsweise kann Lieferfirma und Warenkategorie vorgegeben werden, während dem Erzeugungsdatum entsprechende Zeichen durch Platzhalter ersetzt werden.
In einer weiteren Ausprägung kann der unveränderlich eingeprägte Identifizierungscode, der das Mittel RFID1, RFID2, ...RFIDn zum Antworten veranlasst, eine Verschlüsselung des eigenen Identifizierungscodes, zum Beispiel des EPC-Codes des Mittels RFID1, RFID2, ...RFIDn, oder einer Teilqualifizierung dessen sein. Indem der Algorithmus und Schlüssel nur autorisierten Stellen bekannt ist, kann das Mittel RFID1, RFID2, ...RFIDn auch nur von diesen ausgelesen werden.

Durch den Gegenstand der Erfindung können Raumelemente RE beliebiger Größe sequentiell, das heißt zeitlich nacheinander in Form von Volumeneinheiten VE abgetastet werden. Nur Mittel RFID1, RFID2, ...RFIDn, die sich in einer gerade abgetasteten Volumeneinheit VE befinden, werden aktiviert.

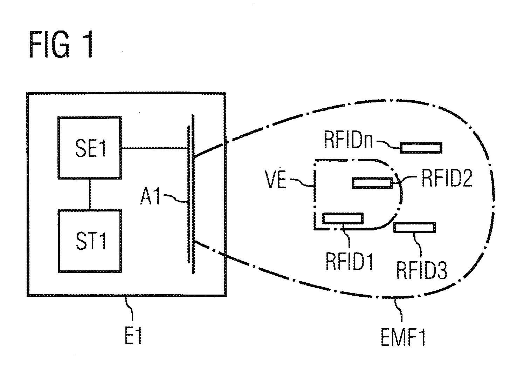

Die Anordnung in Fig 1 zeigt schematisch eine erfindungsgemäße Anordnung zur Datenerfassung mit einer Erfassungseinheit E1 und mehreren Mitteln RFID1, RFID2, ...RFIDn, beispielsweise Radio Frequency Identification Devices oder elektronische Datenträger. In der Erfassungseinheit E1 sind eine Steuereinheit ST1, eine Sende-/Empfangseinheit SE1 und eine Antenne A1 angeordnet. Die Sende-/Empfangseinheit SE1 strahlt über die Antenne A1 ein elektromagnetisches Wechselfeld EMF1 ab, welches in den Mitteln RFID1, RFID2, ...RFIDn bei Überschreiten eines Feldstärkeschwellwerts Emax eine so große Spannung induziert, dass die Mittel RFID1, RFID2, ...RFIDn zur Datenabgabe aktiviert werden. Als Antenne A1 sind beispielsweise planare Antennen, Hornstrahler, Parabolantennen oder lineare Antennen verwendbar. Insbesondere können auch adaptive Antennen zum Einsatz kommen, bei denen die Form und Stärke des elektromagnetischen Wechselfeldes EMF1 durch Phasenansteuerung veränderbar ist.

Mittels der Steuereinheit ST1 werden die Leistung und die Form des von der Antenne A1 abgegebenen elektromagnetischen Wechselfeldes EMF1 bestimmt. Dadurch gelingt es, nur Mittel RFID1, RFID2, ...RFIDn, die sich in einer vorgebbaren Volumeneinheit VE befinden, in einem vorgebbaren Zeitabschnitt t zu aktivieren. Wird die Volumeneinheit VE entsprechend klein gewählt, befinden sich beispielsweise zwei Mittel RFID1, RFID2 in einem Bereich des elektromagnetischen Wechselfeldes EMF1 mit einer Feldstärke oberhalb des Schwellwerts Emax. Nur diese beiden Mittel RFID1, RFID2 werden aktiviert und können Daten abgeben. Wandert die Volumeneinheit VE mit einer Feldstärke oberhalb des Schwellwerts Emax durch entsprechende Ansteuerung durch die Steuereinheit ST1 über den gesamten Volumenbereich, in dem sich Mittel RFID1, RFID2, ...RFIDn befinden, werden in zeitlicher Reihenfolge alle Mittel RFID1, RFID2, ...RFIDn zur Datenabgabe aktiviert.

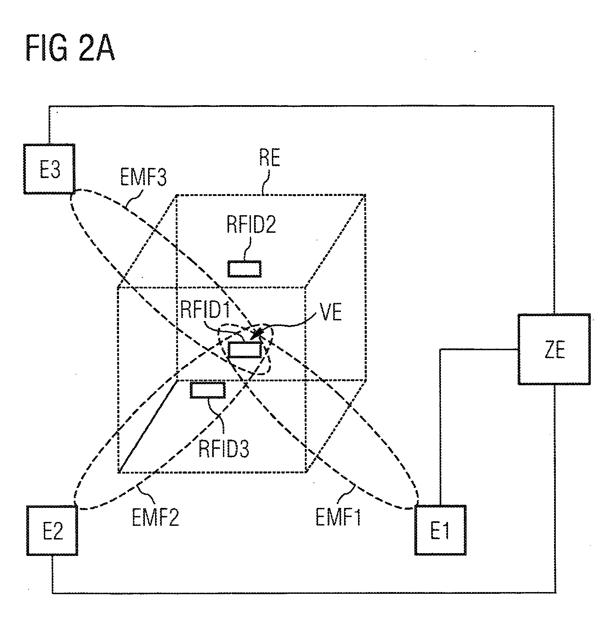

Fig. 2a zeigt eine räumliche Anordnung mit drei Erfassungseinheiten E1, E2, E3 und drei Mitteln RFID1, RFID2, RFID3 im Raumelement RE zum Zeitpunkt t1. Die Erfassungseinheiten E1, E2, E3 sind über eine zentrale Einheit Z untereinander verbunden. Die elektromagnetischen Wechselfelder EMF1, EMF2, EMF3 der Erfassungseinheiten E1, E2, E3 überlagern sich in der Volumeneinheit VE derart, dass in der Volumeneinheit VE die Feldstärke über einem Schwellwert Emax liegt, so dass das eine Mittel RFID1, das sich in dieser Volumeneinheit VE befindet, aktiviert wird. Das heißt, beim Überschreiten des Schwellwerts wird in dem Mittel RFID1 eine so große Spannung induziert, dass das Mittel RFID1 Daten abgibt. Die abgegebenen Daten werden von mindestens einer Erfassungseinheit E1, E2, E3 empfangen und zur Datenauswertung und Weiterverarbeitung an die zentrale Einheit Z übertragen.

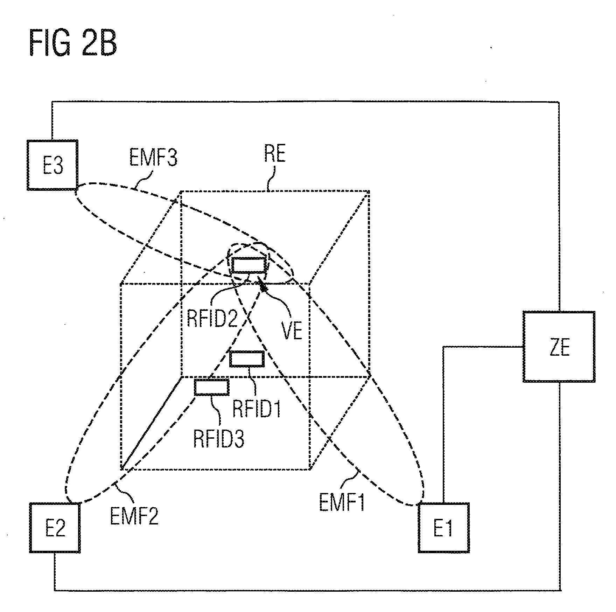

Fig. 2b zeigt die gleiche Anordnung wie in Fig. 2a, aber zu einem späteren Zeitpunkt t2. Durch eine entsprechend geänderte Form der elektromagnetischen Wechselfelder EMF1, EMF2, EMF3 wird in einer nun räumlich anders liegenden Volumeneinheit VE der Schwellwert Emax der elektromagnetischen Feldstärke überschritten, so dass ein anderes Mittel RFID2 aktiviert wird, und dieses Daten abgibt. Über einen vorgebbaren Zeitraum kann somit durch räumlich und/oder leistungsmäßige Änderung der elektromagnetischen Wechselfelder EMF1, EMF2, EMF3 das Raumelement RE in Form eines Volumenelements VE abgetastet werden. Damit können alle Mittel RFID1, RFID2, RFID3 zeitlich nacheinander aktiviert werden.

Sind bei hohen Packungsdichten mehrere Mittel RFID1, RFID2, ...RFIDn in einem abgetasteten Volumenelement VE angeordnet, so geben die Mittel RFID1, RFID2, ...RFIDn Daten zeitlich nacheinander ab, da die Mittel RFID1, RFID2, ...RFIDn beispielsweise derart ausgebildet sind, dass sie Daten nach Aktivierung erst nach einer im Mittel RFID1, RFID2, ...RFIDn gespeicherten, jeweils unterschiedlichen Verzögerungszeit abgeben.

Das Raumelement RE kann auch durch räumliche Bewegung einer oder mehrere Erfassungseinheiten E1, E2, ...En abgetastet und dadurch die Mittel RFID1, RFID2, ...RFIDn zur Datenabgabe aktiviert werden.

Um zu verhindern, dass ein Mittel RFID1, RFID2, ...RFIDn bei wiederholter Aktivierung seine gespeicherten Daten mehrmals in kurzer Folge abgibt, kann im Mittel RFID1, RFID2, ...RFIDn ein Zeitabschnitt dt vorgegeben sein, innerhalb dessen keine nochmalige Datenabgabe erfolgt.

Eine weitere Ausführungsform besteht darin, auf Protokollebene die Mittel RFID1, RFID2, ...RFIDn mit einer eindeutigen Identifikation, beispielsweise einer Nummer zu versehen. Nur bei Aufruf der Identifikation durch die Erfassungseinheit E1, E2, ...En sind die Mittel RFID1, RFID2, ...RFIDn in der Lage, Daten abzugeben.

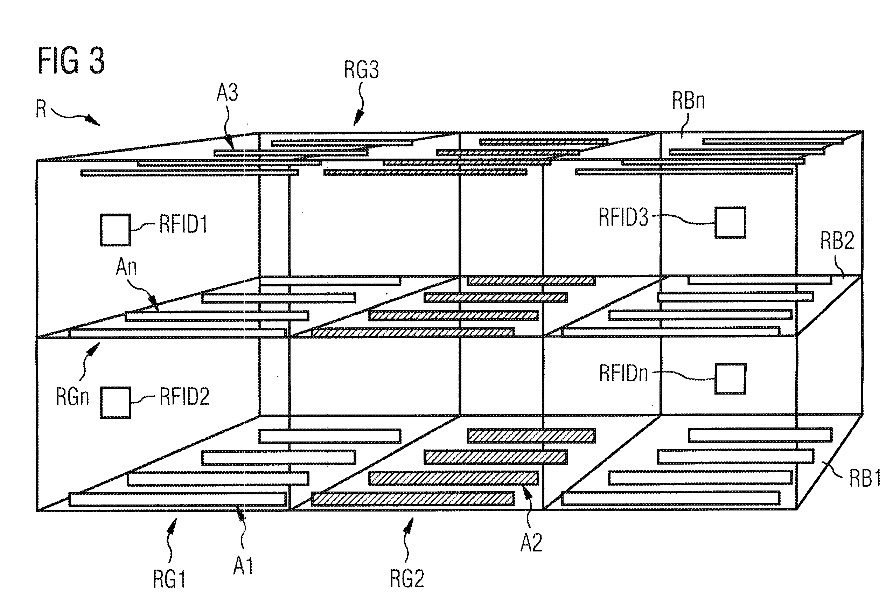

Fig. 3 zeigt eine Anordnung zum segmentierten, abschnittsweise Abtasten von einer großen Zahl von Mitteln RFID1, RFID2, ...RFIDn in einem Regal R. Das Regal R wird dazu in mehrere Regalböden RB1, RB2, ...RBn und diese wiederum in mehrere Regalabschnitte RG1, RG2, ...RGn eingeteilt. Jedem Regalabschnitt RG1, RG2, ...RGn wird eine erfindungsgemäße Erfassungseinheit E1, E2, ...En, welche in Fig. 3 nicht dargestellt ist, mit einer oder mehreren Antennen A1, A2, ...An zugeordnet. Durch diese Konfiguration ergibt sich der Vorteil, dass das abgetastete Raumelement RE einer Regalgeometrie angepasst werden kann. Nicht benachbarte Regalabschnitte RG1, RG2, ...RGn können, ohne sich gegenseitig zu stören, gleichzeitig abgetastet werden, und die Mittel RFID1, RFID2, ...RFIDn geben erfindungsgemäß ihre Daten ab. Die Regalabschnitte RG1, RG2, ...RGn können bei Bedarf in Unterabschnitte aufgeteilt werden.

In einer Ausführungsform werden parallele lineare Dipolantennen innerhalb eines Regalabschnitts RG1, RG2, ...RGn angeordnet. Alle Antennen A1, A2, ...An sind parallel in der Regalrichtung ausgerichtet. Die Länge eines Regalabschnitts RG1, RG2, ...RGn ist näherungsweise gleich der Antennenlänge, beispielsweise gleich der halben Wellenlänge des elektromagnetischen Wechselfeldes. Der laterale Abstand zwischen benachbarten Antennen A1, A2, ...An im selben Regalabschnitt RG1, RG2, ...RGn ist gleich oder kleiner der Wellenlänge des elektromagnetischen Wechselfeldes, um Interferenzen zu vermeiden. Diese Antennenkonfiguration erlaubt eine Erfassungsabdeckung, welche näherungsweise einem Regalbschnitt RG1, RG2, ...RGn entspricht. Zusätzliche Schirmungsmaßnahmen zwischen verschiedenen Regalabschnitten RG1, RG2, ...RGn verbessern die Trennung unterschiedlicher Regalabschnitte RG1, RG2, ...RGn. Die Antennen A1, A2, ...An können auch direkt in die Regelböden RB1, RB2, ...RBn integriert werden.

## Patentansprüche

1. Anordnung zur Datenerfassung zwischen mindestens zwei Erfassungseinheiten (E1, E2, ...En) und mindestens einem im elektromagnetischen Wechselfeld (EMF1, EMF2, ...EMFn) der Erfassungseinheiten (E1, E2, ...En) angeordneten Mittel (RFID1, RFID2, ...RFIDn), wobei das Mittel (RFID1, RFID2, ...RFIDn) erst bei Überschreiten eines Feldstärkeschwellwerts (Emax) Daten abgibt, die von mindestens einer Erfassungseinheit (E1, E2, ...En) erfasst werden,
**dadurch gekennzeichnet,**
**dass** sich die elektromagnetischen Wechselfelder (EMF1, EMF2, ...EMFn) der mindestens zwei Erfassungseinheiten (E1, E2, ...En) derart überlagern, dass durch die Überlagerung der elektromagnetischen Wechselfelder (EMF1, EMF2, ...EMFn) der Feldstärke-Schwellwert (Emax) innerhalb einer vorgebbaren Volumeneinheit (VE) für einen Zeitabschnitt (t) überschritten wird.

2. Anordnung nach Anspruch 1,
**dadurch gekennzeichnet,**
**dass** die elektromagnetischen Wechselfelder (EMF1, EMF2, ...EMFn) der mindestens zwei Erfassungseinheiten (E1, E2, ...En) derart überlagerbar sind und dass die Sendeleistung und/oder Phase mindestens einer Erfassungseinheit (E1, E2, ...En) derart veränderbar ist, dass innerhalb einer Volumeneinheit (VE) für einen Zeitabschnitt (t) der Feldstärkeschwellwert (Emax) überschritten wird.

3. Anordnung nach einem der Ansprüche 1 oder 2,
**dadurch gekennzeichnet,**
**dass** mindestens ein Mittel (RFID1, RFID2, ...RFIDn) derart ausgebildet ist, dass es nach einer vorgebbaren Verzögerungszeit Daten abgibt.

4. Anordnung nach einem der Ansprüche 1 bis 3,
**dadurch gekennzeichnet,**
**dass** mindestens ein Mittel (RFID1, RFID2, ...RFIDn) derart ausgebildet ist, dass nach einer Datenabgabe des jeweiligen aktivierten Mittels (RFID1, RFID2, ...RFIDn) für einen vorgebbaren Zeitabschnitt (dt) keine weitere Datenabgabe von diesem erfolgt.

5. Verfahren zur Datenübertragung zwischen mindestens zwei Erfassungseinheiten (E1, E2, ...En) und mindestens einem im elektromagnetischen Wechselfeld (EMF1, EMF2, ...EMFn) jeder Erfassungseinheit (E1, E2, ...En) angeordneten Mittel (RFID1, RFID2, ...RFIDn), wobei das Mittel (RFID1, RFID2, ...RFIDn) erst bei Überschreiten eines Feldstärkeschwellwerts (Emax) Daten abgibt,
**dadurch gekennzeichnet,**
**dass** sich die elektromagnetischen Wechselfelder (EMF1, EMF2, ...EMFn) der mindestens zwei Erfassungseinheiten (E1, E2, ...En) derart überlagern, dass durch die Überlagerung der elektromagnetischen Wechselfelder (EMF1, EMF2, ...EMFn) der Feldstärke-Schwellwert (Emax) innerhalb einer vorgebbaren Volumeneinheit (VE) für einen Zeitabschnitt (t) überschritten wird.

6. Verfahren nach Anspruch 5,
**dadurch gekennzeichnet,**
**dass** die elektromagnetischen Wechselfelder (EMF1, EMF2, ...EMFn) der mindestens zwei Erfassungseinheiten (E1, E2, ...En) derart überlagert werden und dass die Sendeleistung und/oder Phase mindestens einer Erfassungseinheit (E1, E2, ...En) derart verändert wird, dass innerhalb einer Volumeneinheit (VE) für einen Zeitabschnitt (t) der Feldstärkeschwellwert (Emax) überschritten wird.

7. Verfahren nach einem der Ansprüche 5 oder 6,
**dadurch gekennzeichnet,**
**dass** nach einer Datenabgabe eines aktivierten Mittels (RFID1, RFID2, ...RFIDn) für einen vorgebbaren Zeitabschnitt (dt) keine weitere Datenabgabe von diesem erfolgen wird.

8. Verfahren nach einem der Ansprüche 5 bis 7,
**dadurch gekennzeichnet,**
**dass** die Datenabgabe eines aktivierten Mittels (RFID1, RFID2, ...RFIDn) nur dann erfolgt, wenn zuvor von der Erfassungseinheit (E1, E2, ...En) eine für das aktivierte Mittel (RFID1, RFID2, ...RFIDn) charakteristische Identifikation ausgesendet wurde.

## Claims

1. Arrangement for data acquisition between at least two detection units (E1, E2, ...En) and at least one means (RFID1, RFID2, ...RFIDn) disposed in the electromagnetic alternating field (EMF1, EMF2, ...EMFn) of the detection units (E1, E2, ...En), the means (RFID1, RFID2, ...RFIDn) only outputting data when a field strength threshold value (Emax) is exceeded, said data being detected by at least one detection unit (E1, E2, ...En),
**characterised in that**
the electromagnetic alternating fields (EMF1, EMF2, ...EMFn) of the at least two detection units (E1, E2, ...En) are superimposed in such a manner that by superimposing the electromagnetic alternating fields (EMF1, EMF2, ...EMFn), the field strength threshold value (Emax) is exceeded for a time segment (t) within a predeterminable volume unit (VE).

2. Arrangement according to claim 1,
**characterised in that**
the electromagnetic alternating fields (EMF1, EMF2, ...EMFn) of the at least two detection units (E1, E2, ...En) can be superimposed in such a manner and the transmit power and/or phase of at least one detection unit (E1, E2, ...En) can be changed in such a manner that the field strength threshold value (Emax) is exceeded for a time segment (t) within a volume unit (VE).

3. Arrangement according to one of claims 1 or 2,
**characterised in that**
at least one means (RFID1, RFID2, ...RFIDn) is configured in such a manner that it outputs data after a predeterminable delay time.

4. Arrangement according to one of claims 1 to 3,
**characterised in that**
at least one means (RFID1, RFID2, ...RFIDn) is configured in such a manner that after the respective activated means (RFID1, RFID2, ...RFIDn) has output data, it cannot output any further data for a predeterminable time segment (dt).

5. Method for transmitting data between at least two detection units (E1, E2, ...En) and at least one means (RFID1, RFID2, ...RFIDn) disposed in the electromagnetic alternating field (EMF1, EMF2, ...EMFn) of each detection unit (E1, E2, ...En), the means (RFID1, RFID2, ...RFIDn) only outputting data when a field strength threshold value (Emax) is exceeded
**characterised in that**
the electromagnetic alternating fields (EMF1, EMF2, ...EMFn) of the at least two detection units (E1, E2, ...En) are superimposed in such a manner that by superimposing the electromagnetic alternating fields (EMF1, EMF2, ...EMFn), the field strength threshold value (Emax) is exceeded for a time segment (t) within a predeterminable volume unit (VE).

6. Method according to claim 5,
**characterised in that**
the electromagnetic alternating fields (EMF1, EMF2, ...EMFn) of the at least two detection units (E1, E2, ...En) are superimposed in such a manner and the transmit power and/or phase of at least one detection unit (E1, E2, ...En) is changed in such a manner that the field strength threshold value (Emax) is exceeded for a time segment (t) within a volume unit (VE).

7. Method according to one of claims 5 or 6,
**characterised in that**
after an activated means (RFID1, RFID2, ...RFIDn) has output data, it cannot output any further data for a predeterminable time segment (dt).

8. Method according to one of claims 5 to 7,
**characterised in that**
an activated means (RFID1, RFID2, ...RFIDn) only outputs data if the detection unit (E1, E2, ...En) has previously transmitted a characteristic identifier for the activated means (RFID1, RFID2, ...RFIDn).

## Revendications

1. Dispositif de saisie de données entre au moins deux unités de saisie (E1, E2, ..., En) et au moins un moyen (RFID1, RFID2, ..., RFIDn) situé dans le champ électromagnétique alternatif (EMF1, EMF2, ..., EMFn) des unités de saisie (E1, E2, ..., En), le moyen (RFID1, RFID2, ..., RFIDn) ne délivrant qu'au dépassement d'une valeur seuil d'intensité de champ (Emax) des données qui sont saisies par au moins une unité de saisie (E1, E2, ..., En), **caractérisé en ce que** les champs électromagnétiques alternatifs (EMF1, EMF2, ..., EMFn) des au moins deux unités de saisie (E1, E2, ..., En) sont superposés de manière telle que, du fait de la superposition des champs électromagnétiques alternatifs (EMF1, EMF2, ..., EMFn), la valeur seuil d'intensité de champ (Emax) est dépassée pour un laps de temps (t) à l'intérieur d'une unité de volume prédéterminable (VE).

2. Dispositif selon la revendication 1, **caractérisé en ce que** les champs électromagnétiques alternatifs (EMF1, EMF2, ..., EMFn) des au moins deux unités de saisie (E1, E2, ..., En) peuvent être superposés de manière telle et la puissance d'émission et/ou la phase au moins d'une unité de saisie (E1, E2, ..., En) peuvent être modifiées de manière telle que la valeur seuil d'intensité de champ (Emax) est dépassée pour un laps de temps (t) à l'intérieur d'une unité de volume (VE).

3. Dispositif selon l'une des revendications 1 ou 2, **caractérisé en ce qu'**au moins un moyen (RFID1, RFID2, ..., RFIDn) est réalisé de manière telle qu'il délivre des données après un temps de retard prédéterminable.

4. Dispositif selon l'une des revendications 1 à 3, **caractérisé en ce qu'**au moins un moyen (RFID1, RFID2, ..., RFIDn) est réalisé de manière telle que, après une délivrance de données par le moyen activé respectif (RFID1, RFID2, ..., RFIDn), il n' y a pas d'autre délivrance de données par celui-ci pour un laps de temps prédéterminable (dt).

5. Procédé de transmission de données entre au moins deux unités de saisie (E1, E2, ..., En) et au moins un moyen (RFID1, RFID2, ..., RFIDn) situé dans le champ électromagnétique alternatif (EMF1, EMF2, ..., EMFn) de chaque unité de saisie (E1, E2, ..., En), le moyen (RFID1, RFID2, ..., RFIDn) ne délivrant des données qu'au dépassement d'une valeur seuil d'intensité de champ (Emax), **caractérisé en ce que** les champs électromagnétiques alternatifs (EMF1, EMF2, ..., EMFn) des au moins deux unités de saisie (E1, E2, ..., En) sont superposés de manière telle que, du fait de la superposition des champs électromagnétiques alternatifs (EMF1, EMF2, ..., EMFn), la valeur seuil d'intensité de champ (Emax) est dépassée pour un laps de temps (t) à l'intérieur d'une unité de volume prédéterminable (VE).

6. Procédé selon la revendication 5, **caractérisé en ce que** les champs électromagnétiques alternatifs (EMF1, EMF2, ..., EMFn) des au moins deux unités de saisie (E1, E2, ..., En) sont superposés de manière telle et la puissance d'émission et/ou la phase au moins d'une unité de saisie (E1, E2, ..., En) sont modifiées de manière telle que la valeur seuil d'intensité de champ (Emax) est dépassée pour un laps de temps (t) à l'intérieur d'une unité de volume (VE).

7. Procédé selon l'une des revendications 5 ou 6, **caractérisé en ce que**, après une délivrance de données par un moyen activé (RFID1, RFID2, ..., RFIDn), il n'y aura pas d'autre délivrance de données par celui-ci pour un laps de temps prédéterminable (dt).

8. Procédé selon l'une des revendications 5 à 7, **caractérisé en ce que** la délivrance de données par un moyen activé (RFID1, RFID2, ..., RFIDn) n'a lieu que si l'unité de saisie (E1, E2, ..., En) a émis préalablement une identification caractéristique pour ledit moyen activé (RFID1, RFID2, ..., RFIDn).
